# EUROPEAN PATENT APPLICATION

(11) **EP 3 865 863 A1**
(43) Date of publication of application: **18.08.2021**
(21) Application number: 20179900.4
(22) Date of filing: 15.06.2020
(51) Int. Cl.: G01N 21/88, G01N 21/95

(54) **DEVICE FOR DETECTING SURFACE DEFECTS IN AN OBJECT**

(30) Priority: 11.02.2020 IT 202000002656
(71) Applicant: UTPVision S.r.l., 24061 Albano Sant'Alessandro (BG) (IT)
(72) Inventor: Finazzi, Roberto, 24060 Bolgare (BG) (IT); Sigala, Sergio, 25035 Ospitaletto (BS) (IT)
(74) Representative: De Bortoli, Tiziano

(57) **Abstract**

The present invention relates to a device (1) for detecting surface defects in an object (100), for example an industrial gasket.

The detection device comprises lighting means (2) configured to illuminate said object with a first light radiation (L1) having a first lighting direction (D1) or with a second light radiation (L2) having a second lighting direction (D2).

According to the invention, the detection device comprises acquisition means (3) configured to acquire a plurality of B/W images (I1, I2) of said object at respective acquisition times, when illuminated by said lighting means. Wherein the B/W images are made available to data processing means (7) for further processing each at a time interval which is partially overlapped with a subsequent acquisition time.

## Description

The present invention relates to a device for detecting surface defects in an object.

As known, some components used in industry, for example industrial gaskets of the toroidal type (O-ring type gaskets) used in many devices, must be carefully checked for detecting the presence of defects that can compromise their function.

Generally, surface inspection of such objects is carried out automatically by using dedicated apparatuses.

Patent application EP2280270A1 describes a device for detecting surface defects in O-Ring type gaskets.

The detection device comprises a pair of monochromatic light sources located on opposite sides of a feeding plane of the object to be inspected and configured to emit light radiations having different wavelengths.

Thus, in the operation of the detection device, such light sources illuminate different areas of the object to be inspected with light of different colors, for example green and red.

The detection device further comprises a color camera which can take a color image of the gasket simultaneously illuminated by the two light sources.

Even though the detection devices of the prior art satisfactorily accomplish the tasks for which they are designed, they have some drawbacks.

A problem lies in that the images of the object to be inspected do not have uniform resolution. For example, the resolution of image portions relating to areas of the object illuminated with red light is usually lower than the resolution of image portions relating to areas of the object illuminated with green light.

This is essentially due to the fact that known detection devices generally employ (for economic reasons and for reducing size) color cameras having only one color image sensor.

Such image sensor typically comprises a pixel matrix in which each pixel is coupled with a band-pass filter which makes it sensitive to one of the three primary colors (red, blue, green). The pixels sensitive to each primary color are not uniformly distributed. Usually, an image sensor comprises 25% red color pixels, 50% green color pixels and 25% blue color pixels. Clearly, this particular feature of the prior art detection devices makes the identification of possible defects more difficult in areas of the object illuminated by red light than in areas of the object illuminated by green light.

This may of course cause not negligible limitations in the performance of the detection device, above all as far as the detection precision is concerned.

The problems mentioned above are even more felt when moving objects are to be inspected. In this case, in fact, the acquisition times of the images of the object are to be relatively short, so that the object does not move to much between subsequent shots and it can be assumed as being virtually steady.

The main task of the present invention is to provide a device and a method for detecting surface defects in an object, which allow the drawbacks of the prior art highlighted above to be overcome or mitigated.

Within the scope of this task, it is an object of the present invention to provide a detection device and method which ensure high precision in the detection of possible surface defects of the object to be inspected.

A further object of the present invention is to provide a detection device and method which are able to acquire images of the object to be inspected with a high and constant resolution, regardless of the chromatic components of the light illuminating the object.

A further object is to provide a detection device and method which are particularly adapted to the inspection of moving objects.

A further object of the invention is to provide a detection device and method which can be easily made or implemented industrially, at competitive costs as compared to the prior art devices of the same kind.

According to the invention, this task and these objects, as well as other objects that will become apparent form the subsequent description and the attached drawings, are achieved with a device for detecting surface defects in an object according to claim 1 and the corresponding dependent claims, hereinafter presented.

Preferably, said object is an industrial gasket of the "O-ring" type.

In a general definition thereof, the detection device, according to the invention, comprises:
- lighting means configured to illuminate said object with a first light radiation having a first lighting direction or with a second light radiation having a second lighting direction;
- acquisition means configured to acquire black and white (B/W) images of said object, when illuminated by said lighting means.

According to the invention, in the operation of said device:
- said lighting means illuminate said object with said first light radiation and said acquisition means acquire a first B/W image of said object, at a first time interval;
- said acquisition means make said first B/W image available for further processing at a second time interval, distinct from said first time interval;
- said lighting means illuminate said object with said second light radiation and said acquisition means acquire a second B/W image at a third time interval, distinct from said first time interval and partially overlapped with said second time interval;
- said acquisition means make said second B/W image available for further processing at a fourth time interval, distinct from said third time interval.

Preferably, the detection device, according to the invention, comprises data processing means configured to process said first and second B/W images for providing detection data indicative of the presence of surface defects on said object.

Preferably, said data processing means comprise first data processing means configured to process said first and second B/W images and provide a color image of said object. Preferably, said data processing means comprise second data processing means configured to process said color image and provide said detection data.

Preferably, said lighting means comprise a first light source configured to provide said first light radiation and a second light source configured to provide said second light radiation.

In a further aspect thereof, the present invention relates to a method for detecting surface defects in an object, according to claim 8 and the corresponding dependent claims, hereinafter presented.

In a general definition thereof, the method, according to the invention, comprises the steps of:
- illuminating said object with a first light radiation having a first lighting direction and acquiring a first B/W image, at a first time interval;
- making said first B/W image available for further processing at a second time interval, distinct from said first time interval;
- illuminating said object with a second light radiation having a second lighting direction and acquiring a second B/W image at a third time interval, distinct from said first time interval and partially overlapped with said second time interval;
- making said second B/W image available for further processing at a fourth time interval, distinct from said third time interval.

Preferably, the method, according to the invention, comprises the step of processing said first and second B/W images to provide detection data indicative of the presence of surface defects on said object.

Preferably, said step of processing said first and second B/W images comprises:
- processing said first and second B/W images to provide a color image of said object;
   - processing said color image to provide said detection data.

Further features and advantages of the detection device and method according to the invention shall become more apparent with reference to the following description and the attached drawings, provided only for indicating and non-limiting purposes, wherein:

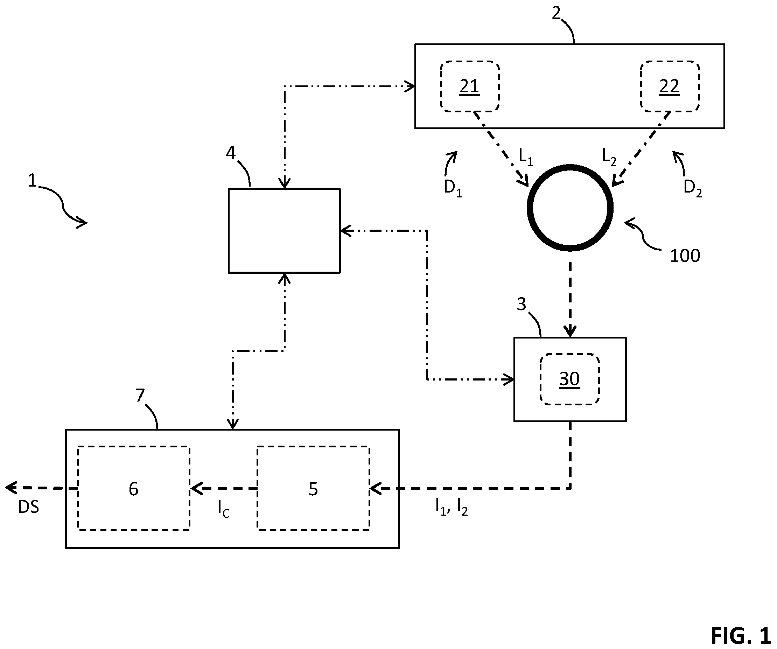

- figure 1 shows a block diagram of the detection device, according to the invention;
- figure 2 schematically shows an operating mode of the detection device, according to the invention;
- figure 3 schematically shows an embodiment of the detection device according to the invention.

Referring to said figures, the present invention relates to a detection device 1 adapted to detect surface defects in an object 100.

The detection device 1 is particularly adapted to detect surface defects in an industrial gasket 100, in particular an "O-ring" type gasket.

It shall be hereinafter described with reference to this area of application, without limiting the scope of the present invention.

The detection device 1, in fact, can be used for detecting surface defects in an object 100 of any kind, for example in any industrial component.

In general, the device 1 is adapted to provide detection data DS indicating the presence of surface defects in the object 100 to be inspected. Such detection data can be used for many purposes, for example for quality control or similar purposes.

In principle, the surface defects which can be detected by means of the detection device 1 can be of any kind. For example, they can consist of micro-scratches, surface roughness variations, color variations, micro-fissures, micro-cracks, etc.

According to the invention, the detection device 1 comprises lighting means 2 configured to illuminate the object 100 along different lighting directions.

The lighting means 2 are provided for illuminating the object 100 with a first light radiation L₁ having a first lighting direction D₁ or with a second light radiation L₂ having a second lighting direction D₂.

The selection of the illumination directions D₁ and D₂ greatly depends on the configuration of the object 100 to be inspected and on the arrangement of the system where the detection device is installed.

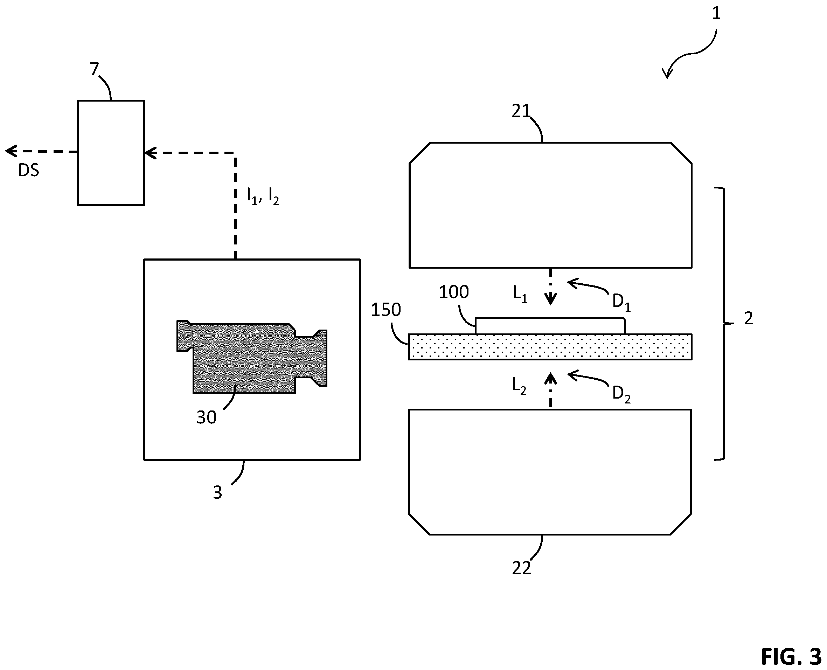

By way of example (figure 3), in the case of a system for inspecting toroidal ("O-ring") gaskets, the lighting directions D₁ and D₂ can be opposite to each other and parallel to the main symmetry axis of the gasket (toroid axis).

Preferably, the lighting means 2 comprise a first light source 21 configured to provide the first light radiation L₁ and a second light source 22 configured to provide the second light radiation L₂.

According to some embodiments, the first and second light radiations L₁ and L₂ consist of white light.

According to other embodiments, the first and second light radiations L₁ and L₂ consist of green light and red light, respectively. This choice is particularly advantageous for detecting defects related to the surface color of the object 100.

Basically, however, the first and second light radiations L₁ and L₂ can be of any kind. They can also consist of non-visible light, for example in the infrared range.

Preferably, the first and second light sources 21, 22 each comprise an assembly of LED devices adapted to emit the first and second light radiations L₁ and L₂, respectively. According to preferred embodiments of the invention (figure 3), the light sources 21, 22 consist of distinct illuminators, each able to emit a corresponding light radiation L₁ or L₂ and located at a corresponding operating position relative to the object 100, so that the corresponding emitted light radiation is directed along the lighting direction D₁ or D₂. Alternative embodiments, however, could comprise a single illuminator adapted to emit the required light radiations L₁ and L₂ according to the respective lighting directions D₁ and D₂. In general, the lighting means 2 can be industrially made according to known solutions, for example according to a solution similar to that described in the above-mentioned patent application EP2280270A1. For the sake of conciseness, thus, they shall be hereinafter described only with reference to the aspects relevant for the invention.

According to the invention, the detection device 1 comprises acquisition means 3 configured to acquire images of the object 100, when the latter is illuminated by the lighting means 2 described above.

The acquisition means 3 are adapted to acquire black and white (B/W) images I₁ and I₂ of the object 100 when the latter is illuminated by the lighting means 2 described above.

In particular, in the operation of the detection device 1, the acquisition means 3 are adapted to acquire:
- a first B/W image I₁ of the object 100, when such object is illuminated by the first light radiation L₁ emitted by the lighting means 2;
- a second B/W image I₂ of said object 100, when such object is illuminated by the second light radiation L₂ emitted by the lighting means 2.

The B/W images I₁ and I₂ acquired by the acquisition means 3 thus relate to views of the object illuminated with light radiations L₁ and L₂ having directions D₁ and D₂ different from each other. Clearly, a same area of the object 100 must be taken in both images I₁ and I₂. Preferably, for acquiring the above-mentioned images, the acquisition means 3 comprise an image sensor 30 formed by a pixel matrix, for example a matrix with 2452x2056 pixels or 1600x1200 pixels.

Preferably, the acquisition means 3 also comprise a light radiation filter (not shown), operatively associated with sensor 30 for filtering light impinging on the latter, and interface electronic circuits (not shown), operatively associated with sensor 30 for managing the information acquired by the latter.

Advantageously, the acquisition means 3 provide for distinct operating steps, in particular an acquisition step ("exposure"), in which sensor 30 receives and integrates the impinging light radiation L₁ and L₂ for creating the B/W images I₁ and I₂ (in ways known for light sensors), and a transmission step ("readout"), in which the sensor makes the acquired information (i.e. the images I₁ and I₂) available for further processing.

The duration of such acquisition and transmission steps can vary according to the needs, for example in the range of a few ms or of tens of ms.

Of course, the acquisition means 3 can provide for further operating steps, for example a stand-by step ("idle"), in which sensor 30 is substantially inactive.

Preferably, in the operation of the detection device 1, the acquisition means 3 acquire the above-mentioned first and second B/W images I₁ and I₂ at time intervals T₁, T₃ distinct from each other.

For the sake of clarity, it is specified that two time intervals are "distinct" form each other if they cannot be overlapped (i.e. they do not have time instants in common), with reference to a given chronological order (time axis).

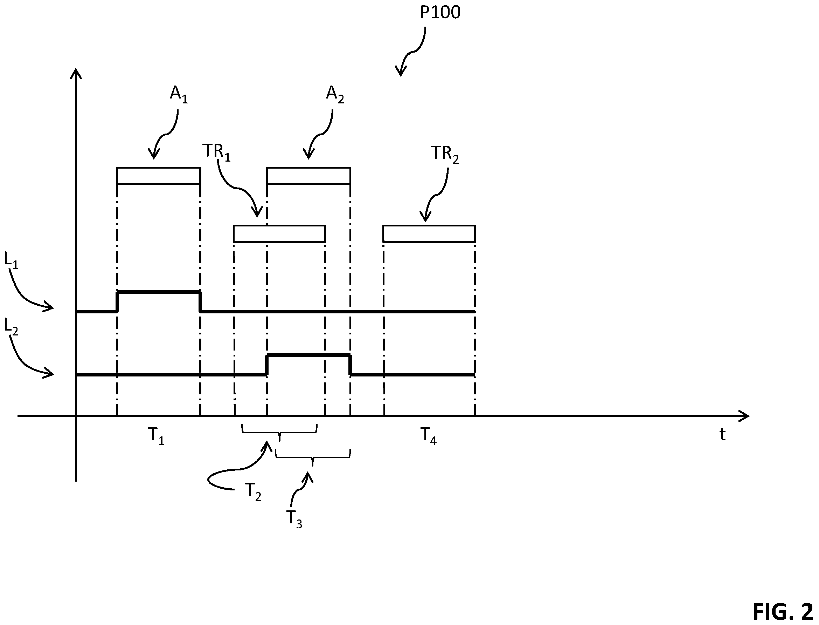

Referring to figure 2, an operating procedure P100 of the detection device 1 as far as the acquisition of the images I₁ and I₂ is concerned shall now be described.

Advantageously, the operating procedure P100 comprises the following steps:
- a first acquisition step A₁, carried out at a first time interval T₁, in which the lighting means 2 illuminate the object 100 with the first light radiation L₁ and the acquisition means 3 acquire the first B/W image I₁ of the object 100;
- a first transmission step TR₁, carried out at a second time interval T₂, in which the acquisition means 3 make the first B/W image I₁ of the object 100 available for further processing;
- a second acquisition step A₂, carried out at a third time interval T₃, in which the lighting means 2 illuminate the object 100 with the second light radiation L₂ and the acquisition means 3 acquire the second B/W image I₂ of the object 100;
- a second transmission step TR₂, carried out at a fourth time interval T₄, in which the acquisition means 3 make the second B/W image I₂ of the object 100 available for further processing.

In an industrial implementation of the detection device, according to the invention, the acquisition means 3 are designed so that the time intervals T₁-T₄ are close to the minimum values achievable with presently available technologies for making image sensors.

In general, in the operating procedure P100, the third time interval T₃ (acquisition step A₂) is distinct from the first time interval T₁ (acquisition step A₁), as mentioned above. In practice, the time intervals T₁ and T₃ are not overlapped with each other.

Furthermore, taking into account the general operation of the acquisition means 3 described above:
- the second time interval T₂ (transmission step TR₁) is distinct from the first time interval T₁ (acquisition step A₁). In practice, the time intervals T₁ and T₂ are not overlapped with each other; and
- the fourth time interval T₄ (transmission step TR₂) is distinct form the third time interval T3 (acquisition step A₂).

According to the invention, in the operating procedure P100, the second time interval T₂ (transmission step TR₁) is partially overlapped with the third time interval T₃ (acquisition step A₂). In other words, time intervals T₂ and T₃ are not distinct from each other, and are instead overlapped with each other for a certain period of time.

This solution allows the overall time for providing the images I₁ and I₂ to be considerably reduced.

The acquisition means 3 can be industrially made according to known solutions. In general, they can comprise a camera provided with an image sensor configured so as to allow a partial overlapping of transmission ("readout") and acquisition ("exposure") steps relating to different images.

For example, the acquisition means 30 may comprise a camera provided with an image sensor 30 of the CMOS (Complementary Metal Oxide Semiconductor) type.

According to the invention, the detection device 1 comprises data processing means 7 configured to process the first and second B/W images I₁ and I₂ of the object 100 (provided by the acquisition means 3) for providing the detection data DS.

According to a possible embodiment of the invention, the data processing means 7 comprise first data processing means 5 configured to process the first and second B/W images I₁ and I₂ of the object 100 and provide a color image I_{C} of said object.

For processing the B/W images I₁ and I₂, the first data processing means 5 may advantageously execute image processing algorithms of a known type.

According to this possible embodiment of the invention, the data processing means 7 comprise second data processing means 6 configured to process the color image I_{C} of the object 100 (provided by the first processing means 5) and provide the detection data DS.

For processing the color image I_{C} of the object 100, the processing means 6 for processing the images can advantageously execute known algorithms for detecting surface defects.

Of course, embodiments of the invention are conceivable in which the processing means 7 obtain the detection data DS by processing the B/W images I₁ and I₂, without generating a color image of the object 100.

Preferably, the detection device 1 comprises control means 4 configured to interact with some components of the detection device (particularly, the lighting means 2, the acquisition means 3 and the data processing means 7) for controlling their operation (for example, for executing the operating procedure P100 described above), by means of an exchange of suitable data signals and control signals.

Advantageously, the control means 4 are configured to coordinate the operation of the other mentioned components of the detection device at a very "low" level, i.e. without the mediation of further control devices.

It is thus possible to drastically reduce conflict conditions and latency times while executing the detection method.

In an industrial implementation, the data processing means 7 and the control means 4 can comprise one or more devices for digital processing of data, for example one or more microprocessors adapted to execute software instructions stored in a storage medium.

In general, the data processing means 7 and the control means 4 can be made according to known circuit and/or data digital processing solutions. For example, the detection device 1 could comprise a control and processing unit provided with one or more microprocessor boards suitably configured for implementing the functions of the processing means 7 and the control means 4.

The detection device, according to the invention, can be easily integrated in a system for performing a (quality) check of an object, for example a system for checking industrial gaskets of the "O-ring" type.

Such system can advantageously comprise several stations for inspecting a gasket along a feeding path of the same.

Each station advantageously comprises a detection device 1, according to the invention, for inspecting the passing gasket and obtaining detection data indicating the presence of possible surface defects.

In figure 3 an embodiment of a detection device 1, according to the invention, particularly adapted for installation in an inspection station is shown.

In this case, the object 100 to be inspected is positioned on a conveyor belt 150 made of a material transparent to the light radiation emitted by the light sources 21, 22.

The lighting means 2 comprise a first and second light sources 21, 22 provided on different sides of the conveyor belt 150 so as to illuminate the object with light radiations L₁ and L₂ having directions D₁ and D₂ opposite to each other.

A camera 3 provided with an image sensor 30 (for example of the C-MOS type) takes shots of the object when it is illuminated by each of the light sources 21, 22 and provides the images I₁ and I₂ so acquired to the processing means 7.

It shall be noted that in an industrial implementation of the invention such as the one herein described, the first and second B/W images I₁ and I₂ of the object 100 are acquired while the object is moving, for example at a typical speed of 12 m/min.

As the acquisition occurs at distinct time intervals T₁ and T₃, the images I₁ and I₂ of the object 100 cannot be perfectly overlapped and are instead shifted by some pixels one relative to the other. This mismatch (whose amount is per se easily predictable) in taking the B/W images I₁ and I₂ can be easily corrected at a processing step (post-processing) of the same images.

In view of the above, it is clear that the present invention also relates to a method for detecting surface defects in an object 100.

The method, according to the invention, comprises the steps of the procedure P100 described above. In particular, the method, according to the invention, comprises the steps of:
- illuminating the object 100 with a first light radiation L₁ having a first lighting direction D₁ and acquiring a first B/W image I₁, at a first time interval T₁;
- making said first B/W image I₁ available for further processing at a second time interval T₂, distinct from said first time interval T₁;
- illuminating the object 100 with a second light radiation L₂ having a second lighting direction D₂ and acquiring a second B/W image I₂ at a third time interval T₃, distinct from the first time interval T₁ and partially overlapped with the second time interval T₂;
- making the second B/W image I₂ available for further processing at a fourth time interval T₄, distinct from said third time interval T₃.

The method, according to the invention, also comprises the step of processing the first and second B/W images I₁, I₂ to provide the detection data DS indicative of the presence of surface defects on the object 100.

Preferably, such processing step comprises:
- processing the first and second B/W images I₁ and I₂ to provide a color image I_{C} of the object 100;
- processing the color image I_{C} of the object 100 to provide the detection data DS indicating the presence of surface defects.

The detection device and method, according to the invention, have considerable advantages over the prior art.

The solution proposed with the present invention provides for taking at least two B/W images of the object 100.

The B/W images of the object 100 so taken have a resolution level independent from the chromatic components of the light radiation used for illuminating the object itself.

This solution allows the above-mentioned problems deriving from possible changes in the resolution associated with different chromatic components of the illuminating light to be overcome.

The detection device and method, according to the invention, thus ensure high precision in detecting possible surface defects of the object to be inspected.

Thanks to the partial overlapping of the "readout" and "exposure" time intervals relating to subsequently acquired images (as provided for by procedure P100 described above), the detection device and method, according to the invention, allow taking images of the object with shorter overall times as compared to the prior art solutions.

This allows the number of objects that can be inspected in a time unit to be increased and makes it considerably easier acquiring images of moving objects, as the possible lack of spatial correspondence between two images of the same object is considerably reduced and can be easily compensated when the images are processed.

The detection device and method, according to the invention, can be easily made or implemented industrially with known components, at competitive costs as compared to the available prior art solutions.

## Claims

1. Device (1) for detecting surface defects in an object (100), said device comprising:
- lighting means (2) configured to illuminate said object with a first light radiation (L₁) having a first lighting direction (D₁) or with a second light radiation (L₂) having a second lighting direction (D₂);
- acquisition means (3) configured to acquire B/W images (I₁, I₂) of said object, when illuminated by said lighting means;
**characterized in that**, in the operation of said device:
- said lighting means (2) illuminate said object (100) with said first light radiation (L₁) and said acquisition means (3) acquire a first B/W image (I₁) of said object, at a first time interval (T₁);
- said acquisition means (3) make said first B/W image (I₁) available for further processing at a second time interval (T₂), distinct from said first time interval (T₁);
- said lighting means (2) illuminate said object (100) with said second light radiation (L₂) and said acquisition means (3) acquire a second B/W image (I₂) at a third time interval (T₃), distinct from said first time interval (T₁) and partially overlapped with said second time interval (T₂);
- said acquisition means (3) make said second B/W image (I₂) available for further processing at a fourth time interval (T₄), distinct from said third time interval (T₃).

2. Device, according to claim 1, **characterized in that** it comprises data processing means (7) configured to process said first and second B/W images (I₁, I₂) and provide detection data (DS) indicative of the presence of surface defects on said object.

3. Device, according to claim 2, **characterized in that** said data processing means (7) comprise first data processing means (5) configured to process said first and second B/W images (I₁, I₂) and provide a color image (I_{C}) of said object.

4. Device, according to claim 3, **characterized in that** said data processing means (7) comprise second data processing means (6) configured to process said color image (I_{C}) and provide said detection data (DS).

5. Device, according to one or more of the preceding claims, **characterized in that** said lighting means (2) comprise a first light source (21) configured to provide said first light radiation (L₁) and a second light source (22) configured to provide said second light radiation (L₂).

6. Device, according to one or more of the preceding claims, **characterized in that** said object (100) is an industrial gasket of the "O-ring" type.

7. Station for the inspection of an object (100) **characterized in that** it includes a detection device (1), according to one or more of the previous claims.

8. Method for detecting surface defects in an object (100) **characterized in that** it comprises the steps of:
- illuminating said object (100) with a first light radiation (L₁) having a first lighting direction (D₁) and acquiring a first B/W image (I₁), at a first time interval (T₁);
- making said first B/W image (I₁) available for further processing at a second time interval (T₂), distinct from said first time interval (T₁);
- illuminating said object (100) with a second light radiation (L₂) having a second lighting direction (D₂) and acquiring a second B/W image (I₂) at a third time interval (T₃), distinct from said first time interval (T₁) and partially overlapped with said second time interval (T₂);
- making said second B/W image (I₂) available for further processing at a fourth time interval (T₄), distinct from said third time interval (T₃).

9. Method, according to claim 8, **characterized in that** it comprises the step of processing said first and second B/W images (I₁, I₂) to provide detection data (DS) indicative of the presence of surface defects on said object.

10. Method, according to claim 9, **characterized in that** said step of processing said first and second B/W images (I₁, I₂) comprises:
- processing said first and second B/W images to provide a color image (I_{C}) of said object;
- processing said color image (I_{C}) to provide said detection data (DS).

11. Method, according to one or more of claims 8 to 10, **characterized in that** said object (100) is an industrial gasket of the "O-ring" type.
